# EUROPEAN PATENT APPLICATION

(11) **EP 3 648 287 A1**
(43) Date of publication of application: **06.05.2020**
(21) Application number: 18204069.1
(22) Date of filing: 02.11.2018
(51) Int. Cl.: H02J 7/00, H02J 7/02

(54) **CHARGING APPARATUS OF POWER BATTERY**

(71) Applicant: Boellhoff (Taiwan) Co., Ltd., 103 Taipei City (TW)
(72) Inventor: Kenny, Anderson, 103 Taipei City (TW); Tsai, Rosa, 103 Taipei City (TW); Schmutz, Wolfgang, 103 Taipei City (TW)
(74) Representative: Margotti, Herwig Franz

(57) **Abstract**

A charging apparatus (100) is suitable for charging a power battery (4). The power battery (4) includes at least one cell (41). The charging apparatus (100) includes a control circuit (2), a power supply circuit (1), and a detection circuit (3). The control circuit (2) is configured to generate a control signal. The power supply circuit (1) is electrically connected to the control circuit (2) and the cell (41), and is configured to output electric power. A voltage of the electric power changes repeatedly according to the control signal to form an oscillation wave, so that the cell (41) receives the electric power to be charged, and receives the oscillation wave to reduce crystals on an electrode plate of the cell (41). The detection circuit (3) is electrically connected to the control circuit (2) and the power battery (4), and is configured to detect a voltage of the cell (41) to correspondingly generate a feedback signal to enable the control circuit to adjust the control signal according to the feedback signal.

## Description

### BACKGROUND

### Technical Field

The present invention relates to a charging apparatus, and in particular, to a charging apparatus that can detect a voltage status and a current status of a battery and can extend the service life of the battery.

### Related Art

During application of a conventional power battery such as a power lithium battery pack, lithium battery cells are connected in series or in parallel to reach a required working voltage. To reach electric power usable for power, a series manner is used to reach the required voltage, or a parallel manner is used to improve battery capacity.

However, for both series connection and parallel connection, an entire battery module damages after a long time of use and crystals are generated. Electrons are attracted on the surface of the scattered crystals to impede current bridging. As a result, incomplete battery power occurs, the efficiency of the battery module attenuates, and the service life is reduced.

### SUMMARY

A charging apparatus in an embodiment provided in the present invention is suitable for charging a power battery. The power battery includes at least one cell. The charging apparatus includes a control circuit, a power supply circuit, and a detection circuit.

The control circuit is configured to generate a control signal. The power supply circuit is electrically connected to the control circuit and the cell, and is configured to output electric power. A voltage of the electric power changes repeatedly according to the control signal to form an oscillation wave, so that the cell receives the electric power to be charged, and receives the oscillation wave to reduce crystals on an electrode plate of the cell. The detection circuit is electrically connected to the control circuit and the power battery, and is configured to detect a voltage of the cell to correspondingly generate a feedback signal to enable the control circuit to adjust the control signal according to the feedback signal.

In the foregoing charging apparatus, in an embodiment, the power supply circuit includes a bridge rectifier, a voltage-doubler rectifier, and a switch, the switch is electrically connected between the bridge rectifier and the voltage-doubler rectifier, and the switch is switched on and off repeatedly to enable an output of the bridge rectifier to selectively pass through or bypass the voltage-doubler rectifier to form the oscillation wave.

In the foregoing charging apparatus, in an embodiment, a frequency of switching on and off the switch is greater than 2000 times per second.

In the foregoing charging apparatus, in an embodiment, the control circuit determines healthiness of the cell according to the feedback signal corresponding to the voltage of the cell, and adjusts the control signal according to the healthiness.

In the foregoing charging apparatus, in an embodiment, when healthiness of the cell is lower, the control signal causes a higher frequency of switching on and off the switch.

In the foregoing charging apparatus, in an embodiment, the control circuit further calculates an average voltage value of the cells according to the feedback signal.

In an embodiment, the foregoing charging apparatus further includes an adjustment circuit, electrically connected between the control circuit and the power battery, where the control circuit further controls the adjustment circuit according to the control signal, to adjust a current magnitude of the oscillation wave.

In the foregoing charging apparatus, in an embodiment, the adjustment circuit further adjusts a capacitance value of a capacitor in the adjustment circuit according to an internal resistance of the at least one cell.

According to one or more of the foregoing embodiments, a voltage of the electric power provided by the charging apparatus of the present invention changes repeatedly according to the control signal to form an oscillation wave, so that crystals on an electrode plate of the cell can be decomposed or deposited into a deposition area, making it easy for a charging current to flow into the cell. That is, by using the charging apparatus of the present invention, the cell of the power battery can be effectively charged and the service life of the power battery can be extended, thereby effectively resolving the problems in the prior art.

### BRIEF DESCRIPTION OF THE DRAWINGS

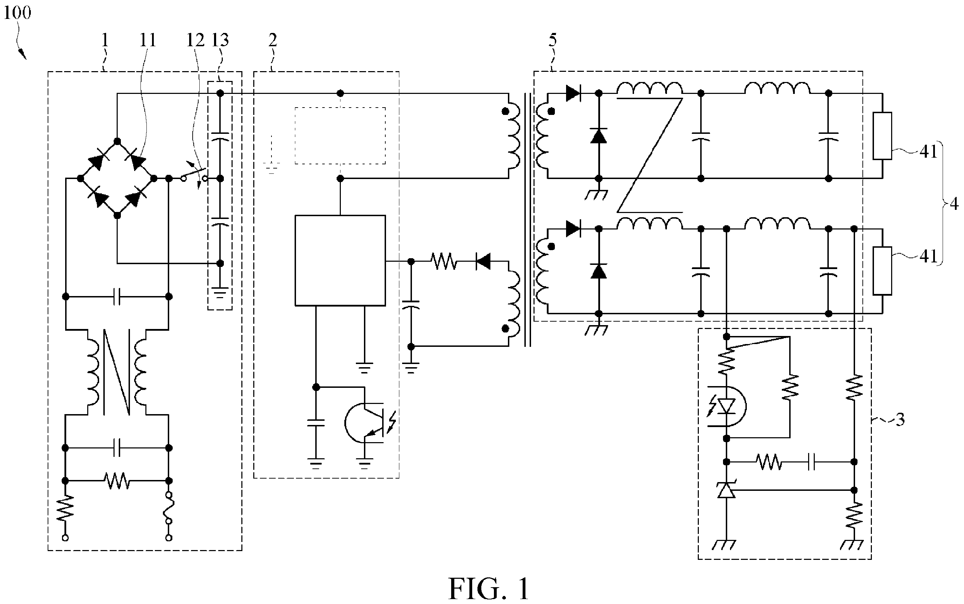

FIG. 1 is a circuit diagram of an embodiment of a charging apparatus according to the present invention.

### DETAILED DESCRIPTION

Referring to FIG. 1, FIG. 1 is a circuit diagram of an embodiment of a charging apparatus 100 according to the present invention.

The charging apparatus 100 is suitable for charging a power battery 4. The power battery 4 includes at least one cell 41. The power battery 4 is, for example, a lithium power battery 4 or a lead-acid battery 4.

The charging apparatus 100 includes a power supply circuit 1, a control circuit 2, and a detection circuit 3. The control circuit 2 may be configured to generate a control signal. The power supply circuit 1 is electrically connected to the control circuit 2 and the cell 41, and is configured to output electric power. A voltage of the electric power changes repeatedly according to the control signal to form an oscillation wave, so that the cell 41 receives the electric power to be charged and at the same time, an electrode plate of the cell 41 is affected by oscillation of continuous oscillation waves to cause crystals on the electrode plate to be shaken off and deposited. Therefore, a quantity of crystals on the electrode plate can be reduced. The oscillation wave is a sine wave carrying randomly occurring microwaves. The crystal in an embodiment is lead sulphate generated from sulfurization. In this way, electrons are easily bonded to cations, and a current flows smoothly.

The detection circuit 3 is electrically connected to the control circuit 2 and the power battery 4, and is configured to detect a voltage of the cell 41 to correspondingly generate a feedback signal to enable the control circuit 2 to adjust the control signal according to the feedback signal. That is, the detection circuit 3 detects a voltage storage amount of each cell 41 to generate the feedback signal. The control circuit 2 adjusts the control signal according to the feedback signal and based on the voltage storage amount of each cell 41, to enable the power supply circuit 1 to supply suitable charging currents for the cell 41 having different voltage storage amounts.

As shown in FIG. 1, the power supply circuit 1 includes a bridge rectifier 11, a voltage-doubler rectifier 13, and a switch 12. The switch 12 is electrically connected between the bridge rectifier 11 and the voltage-doubler rectifier 13. The switch 12 is switched on and off repeatedly to enable an output of the bridge rectifier 11 to selectively pass through or bypass the voltage-doubler rectifier 13. The voltage-doubler rectifier 13 includes two capacitors connected in series. The switch 12 connects nodes between the two capacitors. When the switch 12 is switched on, the voltage-doubler rectifier 13 works and doubles an output voltage. When the switch 12 is switched off, the output voltage is a voltage that originally passes through the bridge rectifier 11. The switch 12 is switched on and off repeatedly at a frequency greater than 2000 times per second, so that change occurs between the voltage and the doubled voltage to form an oscillation wave. The oscillation wave shakes off the crystals, making it easy for the cell 41 to completely receive a charging current during charging.

In addition, the control circuit 2 determines healthiness of the cell 41 according to the feedback signal corresponding to the voltage of the cell 41, and adjusts the control signal according to the healthiness. In some embodiments, the feedback signal includes electric quantity information and current information of the cell 41. The control circuit 2 determines a status (that is, healthiness) of the cell 41 according to the electric quantity information and current information to adjust the control signal to manipulate the power supply circuit 1. For example, among the cells 41, the cells 41 have different electric quantities and can receive different current magnitudes. According to the feedback signal, a control circuit 2 adjusts the control signal for the status of each cell 41, to enable the power supply circuit 1 to supply a suitable power supply current to the cells 41 to enable the cells to fully store electric power. The power supply current includes an oscillation wave to assist in shaking off crystals generated in the cells 41. In other words, to enable the crystals to be effectively shaken off by the oscillation wave, for the cell 41 that has lower healthiness, the control signal transmitted by the control circuit 2 causes a higher frequency of switching on and off the switch 12, to increase a probability of generating an oscillation wave.

In addition, in this embodiment, the charging apparatus 100 further includes an adjustment circuit 5, electrically connected between the control circuit 2 and the power battery 4. The control circuit 2 further transfers an adjustment signal to the adjustment circuit 5. The adjustment circuit 5 adjusts a current magnitude of the oscillation wave according to the adjustment signal. In other words, the adjustment circuit 5 may adjust, according to information of an adjustment signal, a current to a current magnitude suitable for reception by each cell 41, to adapt to an internal resistance of the cell 41. In this embodiment, the adjustment circuit 5 includes an adjustable capacitor, and a capacitance value of the capacitor is adjusted to change a cut-off frequency of a filter formed by a capacitor and an inductor, to adjust the current magnitude of the oscillation wave to meet a suitable charging current magnitude of each cell 41.

In addition, in this embodiment, the detection circuit 3 may further detect an internal resistance of the cell 41 and transfer a detection signal to the control circuit 2, so that the control circuit 2 adjusts a capacitance value of the capacitor according to a detection result.

In addition, in some embodiments, the control circuit 2 may further calculate an average voltage value of the cells 41 according to the feedback signal. As discussed above, the feedback signal includes electric quantity information and current information of the cell 41. Therefore, the control circuit may further calculate the average voltage value according to the feedback signal, determine an electric quantity that can be used by the power battery 4, and adjust the control signal according to the average voltage value to change an electric power (voltage) transferred by a power supply apparatus.

According to one or more of the foregoing embodiments, a voltage of the electric power supplied by the charging apparatus 100 of the present invention may change repeatedly according to the control signal to form an oscillation wave, so that crystals on the electrode plate of the cell 41 are decomposed or deposited in a deposition area, so that electrons can be effectively bonded to cations, a current flows smoothly, and the cell 41 can successfully receive a charging current. In other words, after the power battery 4 is charged by the charging apparatus 100 of the present invention, the electric quantity can reach saturation effectively, and the service life of the power battery 4 can be extended.

## Claims

1. A charging apparatus (100), suitable for charging a power battery (4), the power battery (4) comprising at least one cell (41), and **characterized in that** the charging apparatus (100) comprising:
a control circuit (2), configured to generate a control signal;
a power supply circuit (1), electrically connected to the control circuit (2) and the at least one cell (41), and configured to output electric power, wherein a voltage of the electric power changes repeatedly according to the control signal to form an oscillation wave, so that the at least one cell (41) receives the electric power to be charged, and receives the oscillation wave to reduce a quantity of crystals on an electrode plate of the at least one cell (41); and
a detection circuit (3), electrically connected to the control circuit (2) and the power battery (4), and configured to detect a voltage of the at least one cell (41) to correspondingly generate a feedback signal to enable the control circuit (2) to adjust the control signal according to the feedback signal.

2. The charging apparatus (100) according to claim 1, wherein the power supply circuit (1) comprises a bridge rectifier (11), a voltage-doubler rectifier (13), and a switch (12), the switch (12) is electrically connected between the bridge rectifier (11) and the voltage-doubler rectifier (13), and the switch (12) is switch (12)ed on and off repeatedly to enable an output of the bridge rectifier (11) to selectively pass through or bypass the voltage-doubler rectifier (13) to form the oscillation wave.

3. The charging apparatus (100) according to claim 2, wherein a frequency of switch (12)ing on and off the switch (12) is greater than 2000 times per second.

4. The charging apparatus (100) according to claim 1, wherein the control circuit (2) determines healthiness of the cell (41) according to the feedback signal corresponding to the voltage of the cell (41), and adjusts the control signal according to the healthiness.

5. The charging apparatus (100) according to claim 1, wherein when healthiness of the cell (41) is lower, the control signal causes a higher frequency of switch (12)ing on and off the switch (12).

6. The charging apparatus (100) according to claim 1, wherein the at least one cell (41) is two or more cells (41), and the control circuit (2) further calculates an average voltage value of the cells (41) according to the feedback signal.

7. The charging apparatus (100) according to claim 1, further comprising an adjustment circuit (5), electrically connected between the control circuit (2) and the power battery (4), wherein the control circuit (2) further transfers the control signal to the adjustment circuit (5), and the adjustment circuit (5) adjusts a current magnitude of the oscillation wave according to the control signal.

8. The charging apparatus (100) according to claim 7, wherein the adjustment circuit (5) further adjusts a capacitance value of a capacitor in the adjustment circuit (5) according to an internal resistance of the at least one cell.
